# EUROPEAN PATENT APPLICATION

(11) **EP 1 427 142 A1**
(43) Date of publication of application: **09.06.2004**
(21) Application number: 02292929.3
(22) Date of filing: 27.11.2002
(51) Int. Cl.: H04L 12/28, H04L 12/46, H04L 12/66, H04L 29/06

(54) **Home network gateway device**

(71) Applicant: Thomson Licensing S.A., 92648 Boulogne Cedex (FR)
(72) Inventor: Mischler, Denis, 35235 Thorigné-Fouillard (FR); Crocitti, Valérie, 35230 Saint Armel (FR); Sirot, Joel, 35440 Montreuil sur Ille (FR)
(74) Representative: Schäferjohann, Volker Willi, Dipl.-Phys.

(57) **Abstract**

To integrate the latest broadband access modems like xDSL modems (20) into a home network where all devices can be controlled according to the HAVi standard, it is proposed an architecture for an xDSL HAVi gateway device (13). This xDSL HAVi gateway device (13) not only comprises the xDSL modem (20) and an IEEE 1394 bus interface (22) but also a communication and control module (23) containing a so-called HAVi tuner FCM (24) that is used as an interface for controlling the xDSL modem from a HAVi controller (15). The communication and control module (23) also contains an AV server control module (25) that basically provides a proprietary protocol for communication with the remote AV server (17). The HAVi gateway device has a IP to 1394 streaming conversion module (26) as well. For receiving HAVi compliant messages the xDSL HAVi gateway (13) also has included a HAVi stack (27).

With the invention it is possible to integrate the newly designed xDSL modem into the HAVi network without the need of adaptation of the existing HAVi standard version 1.1. to the new xDSL modem functionalities.

## Description

The invention relates to a architecture of a home network gateway device for bridging the home network with the World Wide Web via a broadband modem such as xDSL modem.

### Background of the invention

A scenario of the future is that the consumer electronic devices in a home shall communicate with each other and may exchange data packets also with streaming audio and video contents. For this purpose the IEEE 1394 bus protocol already exists. This bus protocol is standardized since 1995 and provides for high speed serial data communication. The data transport capacity over the serial bus is currently 400MBit/s. Even higher data rates are planned for the future up to 2 GBit/s. The home network based on this IEEE 1394 bus communication is, therefore, capable to transport one or more video and audio streams in real time. For the transfer of audio and video streams (isochronous data transfer) a separate specification is available with the IEC 61883-Standard. The IEEE 1394 standard specifies only the lower layers (physical layer and data link layer) as well as parts of the transaction or network layer according to the OSI/ISO reference model of the data communication. With the IEC-61883-Standard also the transport layer is additionally specified. Nevertheless, the upper layers of the OSI/ISO reference model, namely session layer, presentation layer and application layer remain unspecified.

A consortium of companies, has already specified these upper layers. The result of this work is the so-called HAVi specification, which is available meanwhile in the version 1.1. The exact title is: "Specification of the home audio/video interoperability (HAVi) architecture, version 1.1, May 15, 2001. With the HAVi specification it is possible to control consumer electronic devices of different manufacturers in the home network from a central controller equipped with display. The HAVi standard provides a Messaging System and quite a lot of further software elements for fulfilling this task. One conception is based on the provision of so-called DCMs in HAVi compliant devices where DCM stands for Device Control Module. A DCM is a HAVi software element providing an interface for controlling general functions of a device. The HAVi specification allows the use of so-called embedded DCMs, which is a DCM preloaded on a HAVi FAV or IAV device. Here, FAV stands for Full Audio/Video device and IAV for Intermediate Audio/Video device. The devices in the home network are classified either FAV devices for the devices having the richest resources with regard to the HAVi standard in particular they run the software elements of the HAVi architecture including a JAVA run time environment. An IAV device is a HAVi compliant device, which runs the software elements of the HAVi architecture but does not have a JAVA run time environment. Further known are HAVi BAV devices for Base Audio/Video device. This is a HAVi compliant device containing self-describing data (SDD data) but not running any of the software elements of the HAVi architecture. At last the HAVi specification also considers a Legacy Audio/Video device (LAV device), which is a non-HAVi compliant device.

As far as the invention is concerned, the lower class HAVi devices, BAV and LAV device will not be discussed in more detail hereinafter. With the powerful messaging concept in combination with the concept of device control modules DCMs, a high level of interoperability is possible. This conception, however, is based on the approach that for quite a lot of different CE devices specialized DCM code units are provided. The current HAVi specification provides e.g. DCMs for the following device types, namely for a tuner, VCR, clock, camera, AV disc, amplifier, display, AV display, web proxy and for a modem. With the modem DCM the software element is available which facilitates to transfer data over a specified network through a modem by opening one or several asynchronous connections between itself and one modem DCM. The basic actions of a modem namely open a connection, modem control for set-up, off-hook and/or dialup, connection and disconnection is specified. This modem DCM, however, lacks to support broadband Internet access that is possible with the new broadband modems based on xDSL technology or cable modem technology. In particular the existing modem DCM does not provide methods and function for retrieving service information from the A/V service provider.

### Invention

The inventors have recognized the problem that there is currently no specification in the HAVi standard about how an xDSL modem shall be controlled to offer AV services such as video-on-demand services (VOD) in a distributed home network. It is, therefore, an object of the invention to prepare an interface for controlling an xDSL modem based on the current HAVi specification without the need to release a new version of the HAVi specification in which a corresponding broadband access modem DCM is provided. The inventors recognized that there is some similarity between the already existing tuner DCM that has been designed to receive broadcasted AV streams (from satellite, cable or terrestrial transmissions) with the xDSL technology where it is possible to receive AV streams from a broadband access. The main differences between a broadcast and broadband access are:
- Bandwidth limitation of the xDSL access compared to broadcasted digital TV signals,
- The fact that the service information data are not recoverable from the stream itself, which only contains one reduced number of services (AV data) from the set of services available at the input of the xDSL server.

It is the general idea of the invention to keep the tuner FCM (Functional Component Module) described in the HAVi specification for the control of the xDSL interface in a transparent way for a HAVi controller. The tuner FCM may be part of a tuner DCM. Starting at this point, the invention also resides in the idea to develop a communication and control module (CCM) that provides the HAVi tuner FCM. Optionally some AV server control means may be included translating the commands received via the HAVi tuner FCM into a understandable form for the xDSL modem to get all the information about the available streams and connecting to the corresponding connecting stream. Further optionally the communication and control module comprises a streaming format conversion module that is responsible for the conversion of the AV transport stream received by the modem into a format required for AV data transport in the home network.

Further advantageous parts of the home network gateway device according to the invention are a HAVi stack for the communication within the HAVi home network, an IEEE 1394 network interface, an xDSL modem and a UPnP IGD interface (Internet Gateway Device) which may be utilized by the CCM to control the xDSL modem in order to establish the connection with the remote AV server. These kinds of xDSL modems including UPnP interface already exist on the market.

### Drawings

Exemplary embodiments of the invention are illustrated in the drawings and are explained in more detail in the description below.

In the figures:
- Fig. 1: shows the link of the World Wide Web and a home network via an xDSL HAVi gateway;
- Fig. 2: shows the principal access architecture in case of an xDSL server;
- Fig. 3: shows the xDSL HAVi gateway detailed architecture according to one embodiment of the invention;
- Fig. 4: shows the interaction of the software components of a HAVi controller DTV and the xDSL Havi gateway;
- Fig. 5: shows an example of a HAVi tuner FCM implementation in the xDSL HAVi gateway;
- Fig. 6: shows an example of the methods and functions of the sub-modules of the communication and control module;
- Fig. 7: shows the installation procedure for the HAVi tuner FCM;
- Fig. 8: shows an example of the get service list procedure invoked at the HAVi tuner FCM; and
- Fig. 9: shows an example of the service selection procedure invoked at the HAVi tuner FCM.

### Exemplary embodiments of the invention

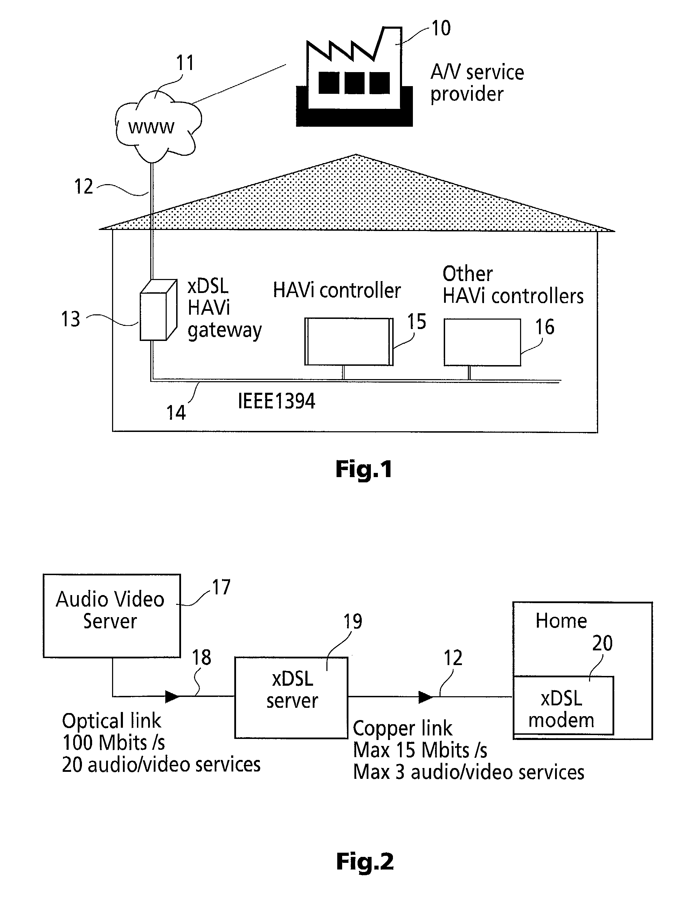

In Fig. 1 reference number 10 denotes an AV service provider, e.g. a video-on-demand service provider. Reference number 11 denotes the World Wide Web. The AV service provider offers its service over the Internet. Reference number 12 denotes an analogue telephone line that connects the AV service provider with the home of a customer of the AV service provider 10. In the home of a customer a home network exists based on IEEE 1394 bus 14. One of the home network stations is a digital TV set 15. One other home network station 16 is depicted but typically in a home network there are further more network stations. In the example it is assumed that the network stations are consumer electronic devices like VCR, DVD player, Set Top Box, Satellite Receiver, Camcorder, Tuner, CD player, Cassette player, Amplifier, Digital Speaker or the like. All the network devices are assumed to be HAVi compliant devices so that they can be controlled centrally via a HAVi controller 15. As the video-on-demand service provider will be accessed over the Internet there needs to be an Internet gateway device 13 that provides all the bridging functionality for bridging the home network and the analogue telephone line 12 over which the Internet protocol is used for data communication.

It is an object of the invention that this Internet gateway device 13 shall be made controllable by the HAVi controller 15.

Usually the HAVi compliant device is made controllable over a HAVi controller by means of the instantiation of an embedded DCM code unit in the respective HAVi compliant device. The HAVi specification provides quite a lot of different DCMs for different types of devices. According to the HAVi specification a DCM may contain one or more functional component modules FCM like for example a DCM for a TV set may contain a tuner FCM, a display FCM and an audio amplifier FCM. Therefore, one way to make the Internet gateway device 13 HAVi compliant and controllable would be to instantiate a xDSL modem DCM for the specific features and services that an xDSL modem has. One problem is, however, that in the existing HAVi specification 1.1 an xDSL modem DCM is not defined. Therefore this kind of solution can only be used if the HAVi Board decides to extend the HAVi specification and to release again a higher version of the HAVi specification. This work can take a lot of time and it is questionable whether the HAVi Board will accept the need for this kind of extension. The solution according to the invention is, therefore, different from this approach and would not need an extension of the HAVi specification.

The solution according to the invention is based on the reuse of the HAVi specified tuner FCM for the purpose of controlling the xDSL modem. To understand that the tuner FCM provides control elements quite similar to those of an xDSL modem, it is advantageous to reflect how the audio/video stream is delivered to the home.

In Fig. 2 reference number 17 denotes an AV server. The AV server is a sort of powerful computer with a number of hard disc drives on which the video films are stored. It is located at the site of the AV service provider 10. Typically the AV server is connected with an xDSL server that can be located distant from the AV server for example in a building of a telecommunication company. Typically the AV server will be connected with the xDSL server 19 over an optical fibre 18. Suppose the optical link has a transport capacity of 100Mbit/s, the AV server may, therefore, in parallel supply around 20 video films in SDTV quality coded in MPEG2 format. The xDSL line 12 that connects the xDSL server 19 with the xDSL modem 20 in the home does not have the same high transport capacity. Typically it is restricted to 15Mbit/s. This means only 3 audio/video streams can be delivered to the home in parallel.

The HAVi tuner FCM is primarily meant to be applicable to digital tuners such as those for ATSC, DVB and DSS. In these systems, quite a lot of AV streams are multiplexed in one data stream that is transmitted over a transponder of a satellite transceiver. The tuner FCM, therefore, primarily provides a service for getting service information like the HAVI tuner FCM services Tuner::GetServiceListInfo; Tuner::GetServiceList; Tuner::SetServiceList; Tuner::GetService; Tuner::GetServiceComponents; Tuner::GetServiceEvents as well as services relating to the service selection such as Tuner::SelectService and Tuner::GetSelectedServices. All these services are specified in the HAVi specification and need not be explained in detail here. One difference to the digital TV systems is that not all the service information is included in the AV stream itself in case of the VOD service. Usually the AV service provider makes available this information via its home page, i.e. via an implementation of an Internet protocol such as HTTP. Another difference is the bandwidth limitation of the analogue TV line to only 15MBit/s. So some kind of adaptation is necessary in the xDSL HAVi gateway 13 if the HAVi tuner FCM will be used for controlling the xDSL modem.

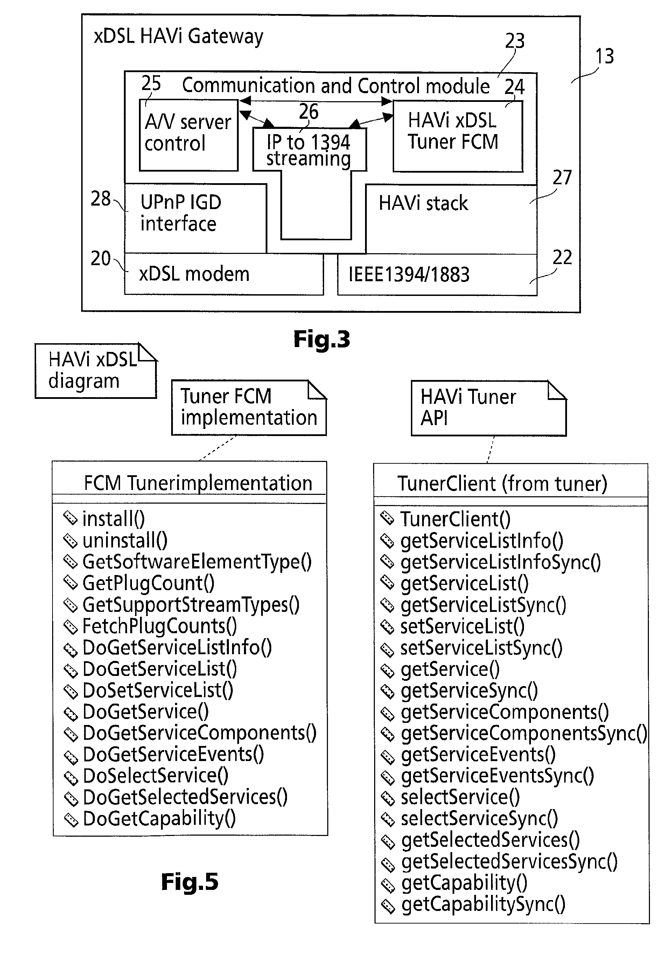

Fig. 3 shows an architecture of the xDSL HAVi gateway device 13 according to the invention. This gateway device, of course, has an xDSL modem 21 and an IEEE1394 interface 22. In addition there is a communication and control module 23 consisting of a HAVi tuner FCM 24 included in a HAVi tuner DCM, an AV service control module 25 and a streaming format converter 26. Besides these components the gateway 13 is further equipped with the software elements of a HAVi stack required for an IAV HAVi compliant device and furthermore an UPnP IGD interface 28. There are already xDSL modems on the market equipped with this UPnP Internet gateway device interface 28. UPnP stands for Universal Plug and Play system that is already specified. This system provides for manufacturer independent control of devices based on Internet protocols. For further information it is referred to the UpnP specification available via the WWW.upnp.org web page.

The communication and control module functionalities are:
- Getting service information
   As all the service information are not included in the AV stream over IP itself, a communication and control module 23 provides a communication line with the AV service provider 10 to get them. This communication can be implemented with an Internet protocol such as HTTP. The UPnP IGD interface 28 supports this Internet protocol communication. It is the AV server control module 25 that needs to translate the information retrieved via HTTP protocol in the corresponding response information for the functions and methods of the HAVi tuner FCM. The data information requested from the AV server by the asynchronous communication provides the input for the tuner FCM methods Tuner::GetServiceXX or Tuner::GetSelectedServiceXX which provides information about the list of available services, the service components, the service events.
- Service selection
   As depicted in Fig. 2, the AV server 17 can transmit for example 20 services and only 3 of them can be simultaneously transmitted to the home network via the xDSL HAVi gateway. So the communication and control module 23 needs to provide a service selection control possibility for the AV server 17 and also for the xDSL server 19. This shall be done on a two-step basis by first selecting the right AV server 17 as a sort of service "Bouquet" and then in the second step the required services (video films within this first selection). Moreover, the bandwidth limitation provides a constraint on the number of simultaneous streams transmitted over the home network. Therefore, the communication and control module 23 has to manage this limitation, too. For this type of two-step service selection the HAVi tuner FCM method Tuner::SelectService is the interface on the HAVi side. This instruction or routine can be rejected in case the maximum number of accessible services has already been exhausted for the connected telephone line. In that case a new type of error code ERESOURCE_LIMIT needs to be implemented in the HAVi tuner FCM.
- Streaming conversion
   The communication and control module 23 is also in charge of the AV stream format conversion between the IP transmission format and the IEEE 1394 bus format. This module has a straightforward design. For isochronous data transfer over the IEEE 1394 bus there already exists a standard in which the packet format is specified. This standard is the IEC 61883 standard. The precise designation of this standard is: IEC International Standard 61883 "Consumer Audio/Video equipment/digital interface, first edition 1998". The standard rules how an MPEG2 transport stream needs to be re-formatted for transmission over IEEE 1394 bus. According to MPEG2 standard, the MPEG2 transport stream consists of data packets each having 188 Bytes of audio/video data. These data packets are to be converted into data source packets with a source packet header of 4 Bytes resulting in a size of 192 Bytes for each source packet. In the IEC 61883 standard it is stipulated that a data source packet is composed, for example, of 8 data blocks of identical size. These data blocks can be directly put into one 1394 bus packet. Before that, however, a so-called CIP header needs to be added to a source packet, where CIP stands for common isochronous packet. THE CIP header has the size of two quadlets, i.e. 8 additional Bytes. Finally, a bus packet header of also two quadlets needs to be added to the CIP packet and appended is a CRC check sum for the payload data of the bus packet having the size of one quadlet. The complete 1394 bus packet, therefore, has a size of 212 Bytes.

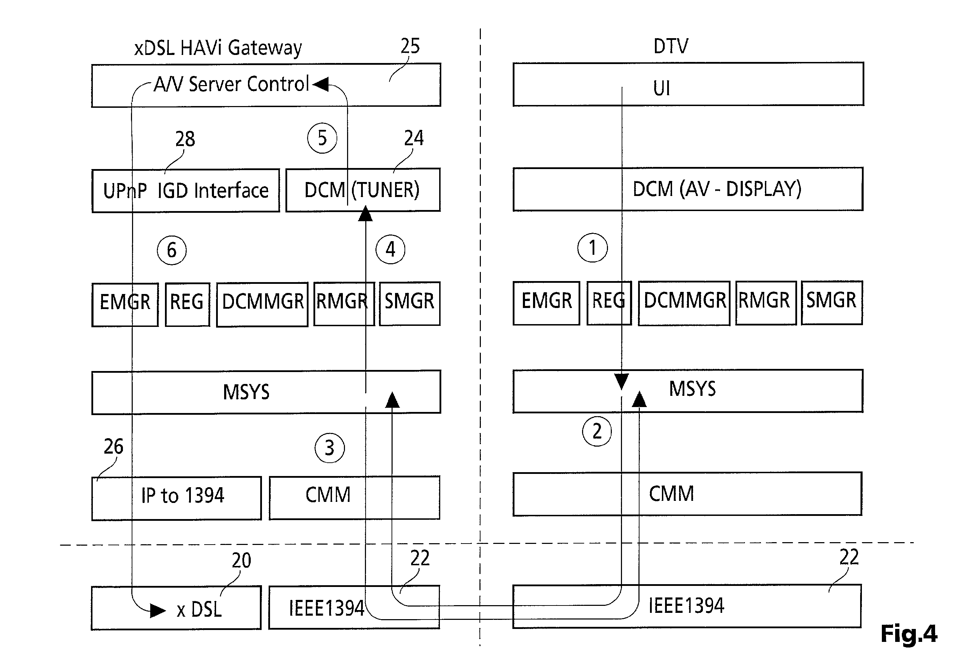

Fig 4 shows a more detailed illustration of the xDSL HAVI gateway elements as well as the software elements of a HAVi controller, namely a digital TV set 15. The right side of Fig. 4 is dedicated to the software components of the digital TV set, whereas the left side of Fig. 4 depicts the software elements of the xDSL HAVi gateway. The identical reference numbers indicate the software elements of the xDSL HAVi gateway already known from Fig. 3. All the remaining software elements not having reference numbers are software elements of the HAVi stack 27 in the xDSL HAVi gateway 13. The software elements of the HAVi stack are an event manager EMGR, a registry REG, a DCM manager DCMMGR, a resource manager REMGR, a stream manager SMGR, a Messaging System MSYS as well as a communication media manager CMM. Below the software component CMM it is shown a further component IEEE 1394. This component is not necessarily a software component. Instead it is the IEEE 1394 interface circuit that is usually implemented in hardware by means of one 1394 physical layer IC and one 1394 data link layer IC. The horizontal dashed line, therefore, indicates the border between software elements and hardware components. Likewise the xDSL modem 21 is a hardware implementation.

The software elements of the HAVi stack are all specified and defined in the HAVi specification. Therefore, for the purpose of the disclosure of the invention they need not be explained in detail. Regarding the software elements for the digital TV set 15 it is pointed out that the same components have identical abbreviations. One difference is that the digital TV set has installed a HAVi AV display DCM. Above the AV display DCM a user interface UI is also present in the digital TV set. When controlling the xDSL HAVi gateway from the digital TV set, first of all the user interface UI generates a request to the messaging system MSYS of the digital TV set. This request is marked with label 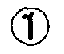 in Fig.4. The messaging system MSYS sends a corresponding HAVi message to the messaging system MSYS of the HAVi gateway 13. This step is marked with label 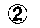 . The messaging system of the HAVi gateway device 13 immediately acknowledges the receipt of the HAVi message in the following step labeled with mark 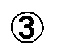 . The messaging system MSYS of the HAVi gateway device 13 informs the tuner DCM 24 about the receipt of a control command for the HAVi gateway, labelled with mark 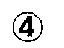 . Assumed is that the control command corresponds to a stop command for stopping an AV stream flowing to the gateway. A tuner DCM provides a corresponding API for stopping the data flow. The tuner DCM 24 informs the AV server control module 25 about the received stop command, see step 5 labeled with mark 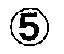 . The AV server control software element 25 translates the received command into a corresponding instruction for the xDSL modem 20 in step 6 labeled with mark 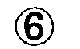 . The stopping of the AV data stream can be reported back to the digital TV set 15 in the opposite way. A corresponding service event can be reported over the HAVi tuner DCM 24. E.g. the HAVi tuner DCM 24 receives a TunerServiceChangedEvent from the event manager EMGR. This will be reported back to the digital TV in a HAVi message.

The role of the UPnP IGD interface 28 is to control the xDSL modem in order to establish a connection with the remote AV server. Once the xDSL modem is connected to the remote server, the UPnP IGD interface 28 will not be used anymore by the communication and control module 23. In case that this specific UPnP interface is not available in an xDSL modem, an alternative solution is to use some proprietary control commands to control the xDSL modem. These control commands would best be implemented in the AV server control module 25.

More important is the AV server control module 25 in the communication and control module 23. It uses UPnP IGD interface 28 to set up the connection and then uses a proprietary protocol that is based on HTTP protocol to communicate with the AV server. The AV server control module 25 needs to have the corresponding implementations of the HAVi tuner FCM method as explained above. The HAVi xDSL tuner FCM is the module, which is responsible for the provision of the HAVi tuner API (application programming interface). This API is described in the HAVi/JAVA API tuner client. The HAVi API specifies the interface for the applications (list of classes and methods to use). The implementation of these classes consists of sending messages to the FCM implementation classes, which really provide the requested actions.

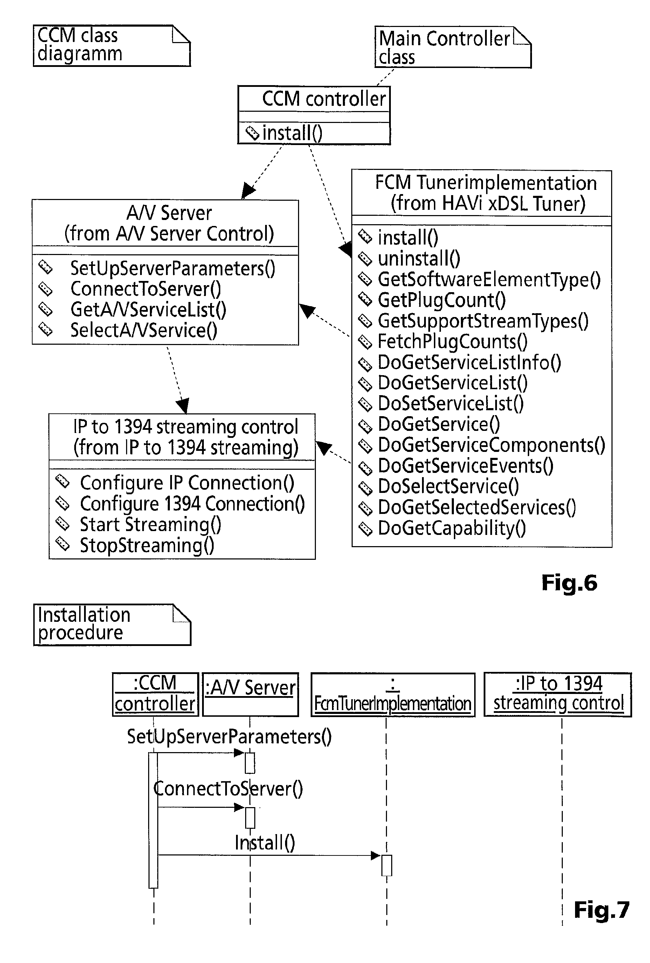

Fig. 5 shows a concrete implementation of a tuner FCM and a corresponding HAVi tuner API. All the functions listed are explained in detail in the HAVi specification and can be taken over without adaptation.

In Fig. 6 further details regarding the implementation of the AV server control module and the IP to 1394 streaming module 26 are disclosed. The listed functions and routines, of course, need to be adapted to the xDSL modem command set in case of the AV server control module 25.

Fig. 7 shows the installation procedure for the HAVi tuner FCM implementation. The CCM controller (part of the CCM not shown) controls the installation process. This unit calls first the SetupServerParameters() function of the AV server control module and the ConnectToServer() function of this AV server control module. Thereafter it calls the install routine of the tuner implementation.

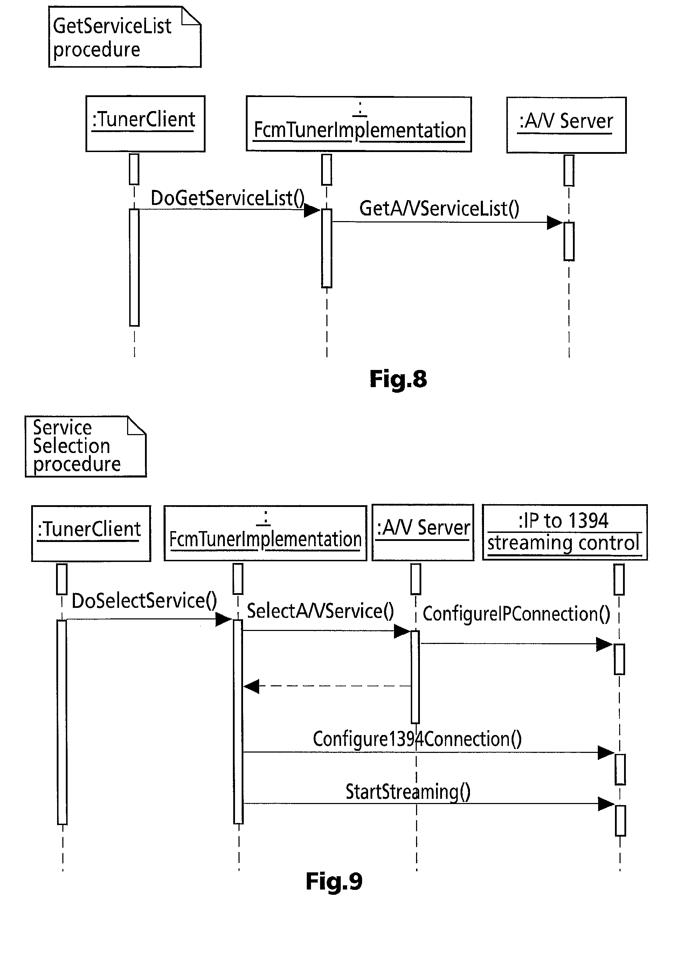

Fig. 8 illustrates the get service list procedure. The tuner client calls the DoGetServiceList() function of the tuner FCM implementation. This tuner FCM implementation forwards the retrieved information to the AV server by calling the GetA/VServiceList function of the AV server control module.

Fig. 9 shows the service selection procedure. The tuner client calls the DoSelectService() function of the tuner FCM implementation. The tuner FCM implementation next calls the SelectA/VService() function of the AV server control module 25. The AV server control module 25 after that calls the ConfigureIPConnection() function in the IP to 1394 streaming conversion module 26. The AV server control module 26 also reports back the configuration parameters to the tuner FCM implementation. The tuner FCM implementation then calls the Configure1394Connection() service of the IP to 1394 streaming conversion module 26. At last it calls the StartStreaming() method of the IP to 1394 streaming conversion module 26.

## Claims

1. Home network gateway device (13) having included a modem (20) for broadband Internet access and an interface (22) for the home network, **characterised in that** the gateway device (13) is equipped with a communication and control module (23) that includes a HAVi tuner FCM (24) for supporting control of the gateway device (13) from a HAVi controller (15) in the home network, where HAvi stands for Home Audio/Video interoperability and FCM stands for Functional Component Module.

2. Home network gateway device (13) according to claim 1, further comprising a HAVi stack that renders the home network gateway device (13) either a HAVi FAV device or a HAVi IAV device, where FAV means Full Audio/Video device and IAV means Intermediate Audio/Video device.

3. Home network gateway device (13) according to claim 1 or 2, wherein the communication and control module (23) further includes an AV server control module (25) for communication with a remote AV server, (17).

4. Home network gateway device (13) according to claim 3, wherein the gateway device (13) further includes an UPnP IGD interface (28) for controlling the modem (20) and the AV server control module (25) uses the UPnP IGD interface (28) to set up the connection with the remote AV server (17).

5. Home network gateway device (13) according to claim 3 or 4, wherein the AV server control module (25) further comprises communication protocol means for the AV data transport between AV server (17) and home network gateway (13) that are used for the AV data transport after setting up the connection with the remote AV server (17).

6. Home network gateway device (13) according to claim 5, wherein the communication protocol means are based on Internet technology, in particular HTTP protocol.

7. Home network gateway device (13) according to one of claims 3 to 6, wherein the communication and control module further includes a streaming format conversion module (26) that is responsible for the conversion of the AV transport stream received by the modem (20) into a format required for AV data transport in the home network.

8. Home network gateway device (13) according to claim 7, wherein the home network interface is an IEEE 1394 network interface.

9. Home network gateway device (13) according to one of the previous claims, wherein the modem (20) is an xDSL modem where DSL stands for Digital Subscriber Line.
